Europäisches Patentamt

European Patent Office

Office européen des brevets

(11) Publication number: **0 269 191**
**A2**

# EUROPEAN PATENT APPLICATION

(21) Application number: 87302528.2

(22) Date of filing: 24.03.87

(51) Int. Cl.4: **B01D 3/02** , B01D 5/00

(30) Priority: 26.11.86 US 935278

(43) Date of publication of application:
01.06.88 Bulletin 88/22

(84) Designated Contracting States:
BE DE FR GB IT NL

(71) Applicant: RECYCLENE PRODUCTS INC.
405 Eccles Avenue
South San Francisco California 94080(US)

(72) Inventor: Abbott, John
639 Blair Island Road Suite 105
Redwood City California 94063(US)
Inventor: Maass , Allan
485 Boynton Avenue
San Jose California 95117(US)
Inventor: McGeehon, William C.
20559 Cedarbrook Terrace
Cupertino California 95014(US)

(74) Representative: Williams, Trevor John et al
J.A. KEMP & CO. 14 South Square Gray's Inn
London WC1R 5EU(GB)

(54) Inverted plate condenser.

(57) A condenser recovery system for recovery of solvents having a dome shaped surface with hot vapor on one side, heat removal means on the other side and oriented such that vapors rising and touching the inner surface of the dome-shaped surface are condensed and the resulting condensate runs down the inner surface of the condenser to a collection trough and optionally including a cold trap vapor seal wherein vapors are condensed in a narrow path between the surface condenser and a container formed in part by the condenser.

Fig.1.

# INVERTED PLATE CONDENSER

## Background of the Invention

This invention concerns a unique vapor condensation recovery system which may be used, for example, in distillation solvent recovery systems, as shown in U.S. Patent 4,457,805. In that system, an open top tank is provided into which solvents to be cleaned and recovered are placed. A disposable plastic bag can be positioned in the tank and the tank is closed by a cover. During the distillation phase of operation, a heat source located in thermal contact with the inside of the tank is energized and the solvent is heated and vaporized. A vent out the tank carries the solvent vapor into a heat exchanger where the vapor is condensed to reform to a clean, liquid solvent. At an appropriate time the bag containing solid residue is removed and discarded.

In such a system, the recovery of the vapor proceeds in a relatively inefficient manner because there is a very restricted orifice for the vapor to exit from the chamber to the exterior condenser. The conventional vapor condensation recovery systems are expensive to fabricate, difficult to clean and exhibit known problems, such as defects and failures due to abuse, chemical attack, thermal overlimiting, etc.

Because of the foregoing problems and other problems associated with this type of solvent recovery system, a need has arisen for an improved solvent condensation system wherein improved seals, greater efficiency, space savings, ease and cost of fabrication and ease of cleaning may be obtained. Furthermmore, the present invention greatly facilitates ease in monitroing maintenance requiring conditions in the condenser components.

## Summary of the Invention

The present invention satisfies the aforementioned needs by providing a condenser system having a condenser surface nominally located above the evaporation chamber. The cover-condenser has a geometric shape such that the condenser inner surface is at an angle of inclination with respect to the horizontal. In this way, most of the condensate which forms on the surface of the condenser flows along its surface to a collection area for gathering and/or reuse rather than dropping back into the contaminated solvent located at the bottom of the tank, and being recycled.

Numerous shapes may be employed in the condenser geometry. For example, a hemisphere, a pyramid, and a trucated cone are specific geometric shapes which are disclosed. It is emphasized that any shape may be employed so long as the inner surface of the condenser has an angle of inclination with respect to the vertical so that condensate will form and flow downward along the inner surface during operation. The preferred embodiment described herein is for small scale use, with the boiler having a capacity of about 5 gallons, but the principles disclosed are applicable to any sized system.

Also, the present invention provides a means to trap vaporized materials and maintain a seal between the inside of the condenser container and the outside environment without the known problems associated with physical seals. The present invention provides a vapor seal by providing at the interface between the contained volume of the vapor container and the outside environment a nominally open path, typically convoluted, preferably having on either side of the path surfaces which are in thermal contact with a coolant source of sufficient capacity to cause the vaporized liquid to condense. Numerous configurations may be employed for the container interface surfaces. It is emphasized that virtually any shape may be employed so long as the cooling surface area is sufficient to condense essentially all of the vapor attempting to pass through the interface path for any anticipated vapor volume, heat energy application rate, coolant flow rate and other operating conditions.

The primary object of the present invention is to provide for a more physically and thermally efficient recovery of materials, especially fluids. Another object of the present invention is to provide an efficient condenser system which takes up less space than previously known recovery systems. Another object of this invention is to provide for a more effective seal for vapor containers. Further objects of this invention are to provide for a system having lower cost of fabrication and easier maintenance. Other objects of this invention will become apparent from the following detailed specification.

## Drawings

Fig. 1 is a front cross section view of the preferred embodiment of the present invention;

Fig. 2 is a top view of the preferred embodiment of the present invention;

Fig. 3. is a front, perspective view of an alternate embodiment of the present invention

Fig. 4 is a partial cross section view of the Fig. 3 embodiment taken along line 4-4 of Fig. 3; and

Fig.5 is a partial cross section view of a third embodiment of the present invention.

Fig. 6 is an enlargement of the preferred embodiment of the vapor seal feature.

Fig. 7 is a cross-sectional view of an alternate embodiment of the vapor seal feature.

Fig. 8 is a cross-sectional view of another alternate embodiment of the present invention.

Description of the Preferred Embodiment

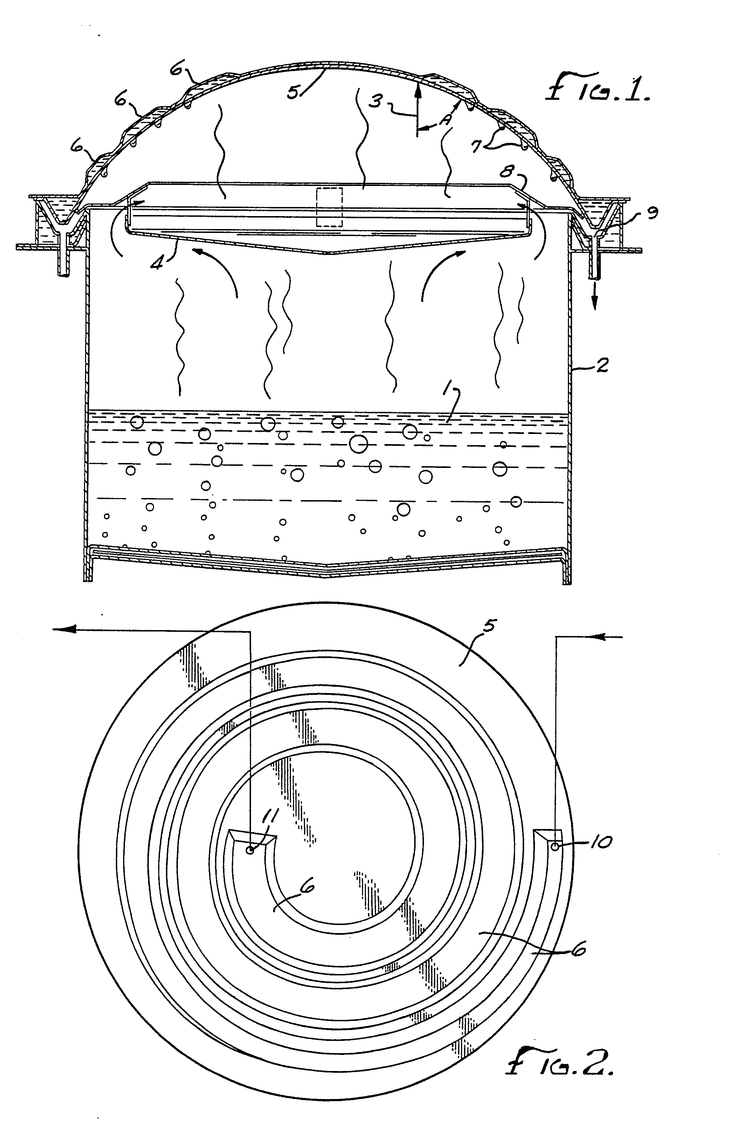

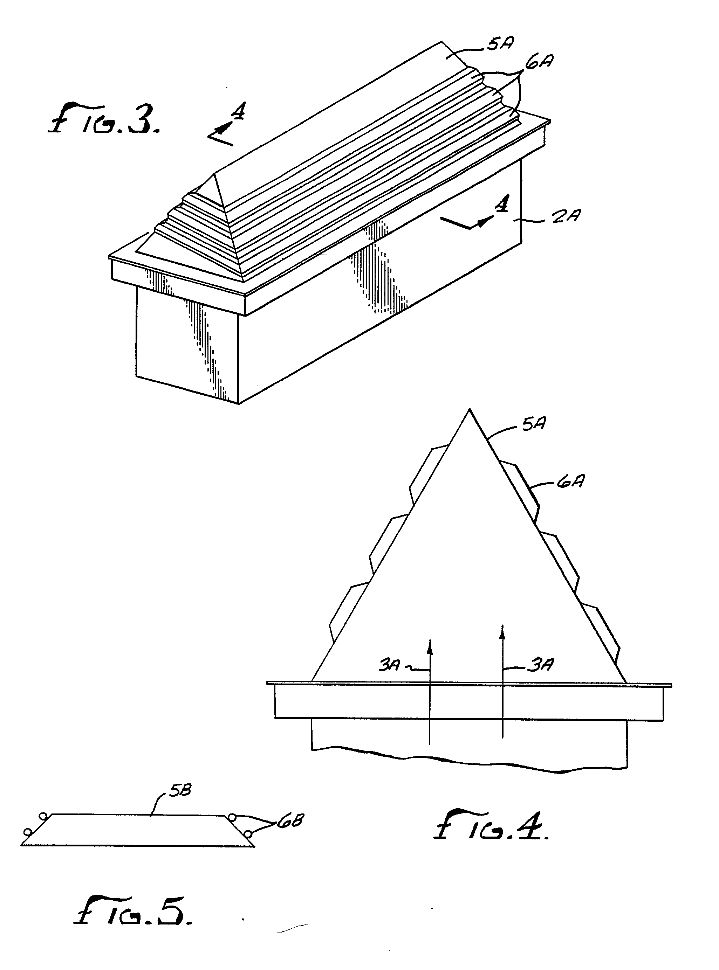

The present invention will be described with reference being made to the accompanying drawings and specifically with respect to the preferred embodiment of the invention as shown in Figs. 1 and 2.

Referring to Fig. 1, the liquid solvent 1 in the tank 2 is heated in any conventional manner to cause boiling of the solvent or vapor to rise. The solvent vapor rises by convection after activation of the heater as shown by rising vapor vector 3. The vapor passes around or through optional splash baffle 4 and impinges upon the inner surface of the condenser dome 5.

Vector 3 forms angle A with the tangent of the inner surface of the condenser. The inverted condenser 5 removes heat energy from the solvent vapor by virtue of coolant mass or fluid flowing through coolant fluid chamber 6, thereby removing heat energy and causing the solvent vapor to condense to the liquid state to form droplets 7 on the inner surface of condenser dome 5. The coolant chamber 6 in this illustration is in the form of a continuous spiral shaped coil as depicted in Fig. 2, although any conventional coolant channel construction, sujch as separate tubes, could be employed. Primarily due to gravity the droplets 7 to run down the inner surface of the condenser 5. Splash baffle 4 is positioned to avoid contamination of the condenser surface from the agitated boiling liquid, if required. The ring 8 directs the falling droplets into a collection trough 9, if required. The collection trough 9 may be of conventional design or may be a cold trap vapor seal, also of the present invention and as more fully described in regard to Figures 6-8. The baffle 4 and ring 8 are mechanically adhered to the condenser dome. As may be seen in Fig. 1, the condensate which has collected in trough 9 runs off and through a distribution system, not shown, and/or then to a collection vessel, not shown, for further use.

Fig. 2 is a top view showing the configuration of one embodiment of the coolant fluid chamber 6 as located on the outer surface of the dome 5. As may be seen, the coolant chamber 6 is in the shape of a spiral chamber having an inlet 10 near the outer periphery of the hemispherical dome and an outlet 11 located at an inner and upper region of the outer surface of the dome 5. This illustration thus provides the coolest condensing surface around the outer periphery to maximize the condensation or sub-cooling in that area.

The condenser dome is so designed and constructed so as to remove heat energy from a convectively rising vapor. The reduction in heat energy results in the vapor changing phase to liquid and condensing on the inner surface 5. As desired, some fluid sub-cooling may also be accomplieshed with this condenser surface. The inverted surface condenser removes heat energy from the vapor by use of a coolant fluid, typically water, caused to move in thermally conductive contact with the reverse side of condenser dome surface 5.

Gravity will cause the condensate to run down the inner surface into a collection trough, or other device for removal to a storage vessel or directly to subsequent use. Because gravity is the primary force which gathers or collects the condensate droplets 7, a major consideration in the design of a system utilizing this invention is determination of the proper angulation of the cooled condensing surface so that the formed droplet of fluid will, when reaching sufficient size, run down the inner surface of the condenser to the collection system rather than droping back down into the contaminated solvent at the bottom of the boiler tank. If the condenser surface was normal to the rising vapor vector 3 in Figure 1, then the droplets would form on the cooled surface until such time that increasing droplet weight overcame the inherent adhesive forces of the particular fluid. The droplet would then fall free of the condensing surface and return to the boiler tank to ber reprocessed. Such a condition of constant recycling is known as refluxing and is an inefficiency to be avoided in design of a solvent recovery system.

Determination of an acceptable surface angulation for any given fluid and any given functional condition requires evaluation of numerous parameters such as the physical cohesive and adhesive characteristics of the subject fluids, the temperatures at which the distillation takes place, the type of surface conditions and temperature of the condensing surfaces, and the effect of the "carried over" impurities or adulterants that may be present.

Specific determination of the minimum angle of inclination for the inner surface of the condenser surface may be made empirically or through derivation from general equations. It should be noted that the optimum angle of inclination is a function of many factors including the material of construction of the condenser inner surface, the condition of the surface, the fluid under consideration and the operating temperature. It is also noted that in a domed design, there is a "dead" or ineffective zone near the center of a continuously curved dome condenser, such as shown in Fig. 1, which should not be considered in either an empirical or mathematical determination.

The following equations provide a guide for a mathematical determination of the angular effectiveness of a proposed dome surface: A = Adhesive Force = $S_{LV}$ Cos $(90° -$ angle A) and
$S_{SV} - S_{SL} = S_{LV}$ Cos $90° -$ angle A) where $S_{SL}$ = surface tension of the solid-liquid film $S_{SV}$ the surface tension of the solid-vapor film and $S_{LV}$ = the surface tension of the liquid-vapor film. Thus, when the second equation above is in equilibrium, or positive to the left hand portion of the expression the droplet of the candidate liquid will release from the surface and fall back.

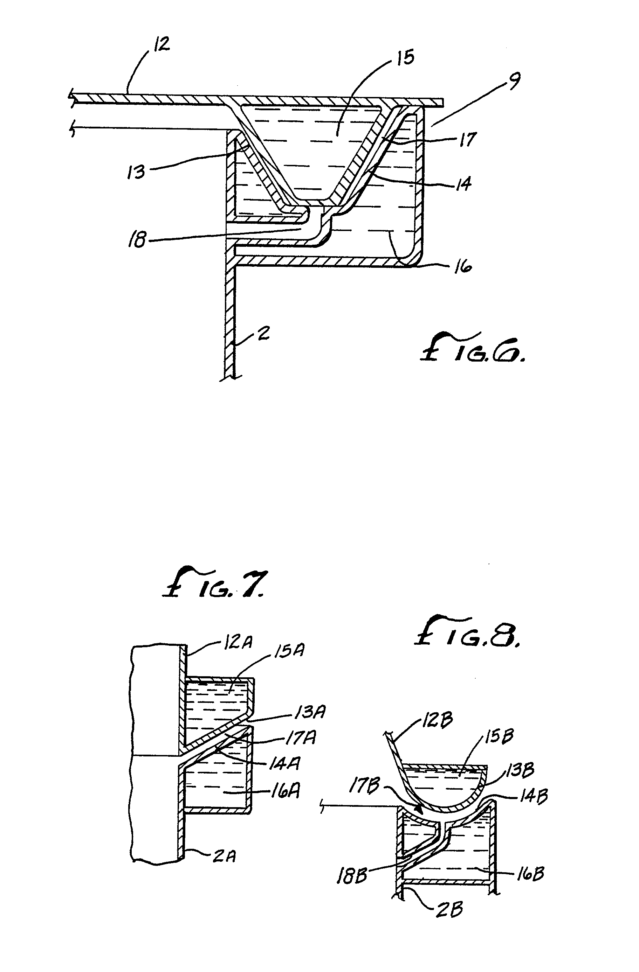

The inverted surface condenser will perform in a variety of configurations or specific geometric shapes as illustrated in Figs. 3, 4 and 5. Figs. 3 and 4 show a condenser dome in accordance with the principles of this invention wherein the dome is shaped like an A-frame roof or wedge. Corresponding components of the embodiment of Figures 3 and 4 bear the same numbers as the preferred embodiment of Figs. 1 and 2, except that an "A" has been added to each corresponding numeral. As may be sen in Figs. 3 and 4, boiler 2A has condenser dome 5A shaped as a wedge and has positioned on its outer surface a coolant fluid chamber 6A. Fig. 4 shows the rising vapor vector 3A as well as the inside of the condenser dome 5A and the coolant fluid chamber 6A.

In still another embodiment, as shown in Fig. 5, the dome may be of a conical or truncated conical shape 5B having coolant fluid chamber passages 6B shown on the outer surface of the condenser dome. It is to be noted that this invention is not limited to the specific geometric configurations shown but that any geometric configuration is within the scope of the present invention so long as the angle of inclination of the dome condenser causes condensed liquid to flow along its inner surface due to surface tension properties, rather than to drop back into the contaminated solvent located in the boiler during operation. It is to be appreciated that the ability of the droplets to flow into the collection device along the inner surface of the dome is less effective as the angle of inclination of the dome approaches normal to the vector of rising vapors.

As stated before, the collection trough 9 may be of conventional design or may be a cold trap vapor seal also comprising an invention herein. Shown in Figure 6 is a preferred embodiment of the cold trap vapor seal, located at the perimeter of cover 12 of the condenser and at the upper outer portion of the tank 2. The seal has upper seal surface 13 located on the cover 12 and lower seal surface 14 positioned on the tank 2. Also, as may be seen, the surfaces 13 and 14 are in thermal contact with coolant channels 15 and 16, respectively. The surfaces 13 and 14 define a contoured path at 17 through which vapor attempts to escape from the inside of the tank. At a low point in the interface path 17 is located a drain 18 for return of condensate to the tank 2 if desired, or for external collection and/or use. The cover 12 is shown resting on the tank 2 for support although a vapor-tight seal is not formed or necessary due to the present invention.

It is to be understood that heated vapors in the zone near the cold trap vapor seal of Figs. 1 and 6 are those which would be normally present in any tyupical vapor handling system. The interface of the two surfaces 13 and 14 are maintained in a non-physically sealed relationship. It is to be understood, however, that these interface surfaces would be placed as close together as is economically reasonable for a greater effectiveness from the cold trap vapor seal principles operative in this design. The coolant fluid used in channels 15 and 16 act to absorb and remove sufficient input energy to reduce the vapors to a liquid state. A cold trap vapor seal is ideally designed such that coolant flow is introduced into both channels 15 and 16. The cold trap vapor seal is sized such that total surface area, coolant flow rate, thermal capacity, and temperature characteristics are such that the combined heat removal capability of the cold trap vapor seal may be equal to, greater than, or, in some applications, less than the heat input source capacity. as desired.

In operation, the cold trap vapor seal will produce condensate or regenerated fluids, at the seal interface. The condensate thus produced in the seal interface may then be collected and removed from the evaporator or may simply be returned to the evaporator for recycling, as shown in Fig. 1 and in Fig. 6 at drain 18. In some circumstances, it may be desirable to allow a portion of the condensed fluid to remain in the interface path 17 to act as a perfectly conforming liquid trap physical barrier that will further enhance the seal effectivity. In zero gravity applications of this cold trap vapor seal device it would be required to have some physical force input in order to collect and/or remove resultant fluids such as a wiper device or a directionalized flow of cool inert gas or other physical means in order to remove the fluid condensate at the seal interface. The outer lip defining the path 17 is higher than the inner lip so that should drain path 18 become clogged, condensate will flow back into the container volume rather than overflow to the outside.

In Fig. 7 an alternate embodiment of the cold trap vapor seal is shown wherein corresponding parts have been designated with the same reference numerals as in Fig. 6 except that letter "A" has been added to corresponding features. Thus, cover 12A has coolant channel 15A with upper surface 13A and tank 2A has attached to it coolant channel 16A with heat transfer surface 14A. The heat transfer surfaces 13A and 14A define the path 17A through which the vapor passes. As may readily be seen in Fig. 7 there is no separate drain channel 18 for condensed fluid. Rather the path 17A is simply a straight inclined path leading downwardly and inwardly so that the condensate formed in the path 17A will, through force of gravity, drop down to surface 14A and flow into boiler 2A, rather than to change directions as in the interface path 17 of Fig. 6. As is readily apparent to those skilled in the art, the heat transfer medium in or comprising the channel 15, 15A and/or 16, 16A may be liquids such as water, polyglycols, or liquid sodium; or gases such as hydrogen, air or helium; or solids such as iron, copper, etc. Also, it is apparent that heat removal may be accomplished through all of or a portion of the periphery of the interface.

In Fig. 8 an alternate embodiment is disclosed, with corresponding components having the same reference numerals as in Fig. 6 excepts that a "B" has been added to corresponding features. Thus cover 12B has attached to it coolant channel 15B and surface 12B. Boiler 2B has attached to it coolant channel 16B and surface 14B, the surfaces 13B and 14B thereby forming a contoured path 17B having generally, a semi-circular configuration. At the bottom of surface 14B is formed a drain path 18B leading back into the interior of the boiler 2B. It is apparent that the opening of drain path 18B may be placed at other than the low point in the tortuous path 17B to provide barrier as described above. Such a physical barrier may also be formed simply by offsetting the height of the inner and outer lips of the path 17B so that the outer lip is higher than the inner lip, as shown, e.g., in Figures 1 and 6.

In this thermal seal, many fundamentals of heat transfer must be applied when considering and determining specific size and configuration. The length, width, total internal surface, surface configuration, coolant temperature and acceptable temperature rise are all components to be considered in a working application of this invention. As should be apparent this cold trap vapor seal is applicable with a condenser for materials, especially liquid recovery and is also usable separately in vessels that vaporize or boil liquids or for other purposes such as drawing off vapors to be used in some processes. It is also intended that this invention can be used with the inverted plate condenser of this invention and with other vapor control equipment or components such that when the primary operating components of the equipment shut down and it is undesirable to have any vapor escape, then a cold trap vapor seal of the present invention may be employed. It is also possible to use a cold trap vapor seal of the present invention so as to allow a small amount of vapor escape when desired through the gap or to equalize pressure between the inside and outside environments. The cold trap vapor seal of the present invention may also be used as a standby system wherein the coolant for coolant channels 15 and 16 is activated only when some other sealing means is shut off or malfunctions. Also as is apparent the trap or path 17 formed by the surfaces 13 and 14 can be of any shape or configuration to provide an adequate coolant surface. Preferably the surface is such that there is no direct path for vapor to escape.

## Claims

1. A surface condenser comprising a dome shaped heat conducting suface having a first side and a second side, a heat removal chamber means for containing a heat transfer medium and located on the first side of the heat conducting surface, a source of hot vapor, and means for passing the hot vapor over the second side of the heat conducting surface.

2. The condenser of claim 1 wherein the first side of the surface is above the second side.

3. The condenser of claim 1 wherein the surface is of pyramidal shape.

4. The condenser of claim 1 wherein the surface is of wedge shape.

5. The condenser of claim 1 wherein the surface is of conical shape.

6. The condenser of claim 1 wherein the surface is of truncated conical shape.

7. The condenser of claim 1 wherein the surface is of flat angled plate shape.

8. The condenser of claim 1 wherein the chamber means is a continuous channel.

9. The condenser of claim 1 wherein the chamber means is of spiral shape.

10. The condenser of claim 1 wherein the chamber means has an inlet, an outlet and extends from a lower outer region of the dome to a higher region of the dome.

11. The condenser of claim 1 further including a splash baffle means for preventing a contaminant material from impinging on the second side of the surface.

12. The condenser of claim 1 further including a collection trough means for collection and removal of condensate.

13. The condenser of claim 3 wherein the second surface of the dome is positioned at about the sufficient angle to horizontal for causing liquid to be condensed from the hot vapor to migrate downwardly along that portion of the inner surface to an outlet for the liquid.

14. The condenser of claim 1 further including a vapor control system comprising a container having a bottom, side walls and wherein the surface condenser forms the container with the bottom and side walls, the outer peripheral region of the container having at least one heat removal channel and at least one heat removal surface, arranged so that upon placement of the surface condenser on the container, the channel and the surface form a narrow path fronm the inside of the container to the outside of the container.

15. An inverted surface condenser comprising an inverted dome having an inner surface and an outer surface, coolant chamber means positioned on the outer surface and having a coolant inlet and a coolant outlet, a splash baffle attached to and positioned under the dome, and a menas attached to the condenser and positioned under the dome for collection and transport of condensate.

16. The condenser of claim 14 wherein the dome is of hemispherical shape.

17. The condenser of claim 14 wherein the dome is of pyramidal shape.

18. The condenser of claim 14 wherein the dome is of conical shape.

19. The condenser of claim 14 wherein the dome is of truncated conical shape.

20. The condenser of claim 14 wherein the dome is of flat angled plate shape.

21. The condenser of claim 14 wherein the inner surface of the dome has at least a portion thereof positioned at least a minimum predetermined angle to the horizontal for condensate formed thereof to adhere to that portion of the inner surface and migrate downwardly along that portion of the inner surface to said collection and transport means.

22. A condenser for a liquid vaporizing tank, comprising, a dome cover for the tank, said dome cover having downwardly-facing interior surface portions, means for cooling said interior surface portions for causing condensation thereon of the liquid vaporized in the tank, said interior surface portions being inclined from the horizontal at a sufficient angle for causing a substantial proportion of the condensed liquid formed thereon to migrate downwardly therealong, and means below a lowermost portion of said interior surface portions for collecting the condensed liquid.

23. The condenser of claim 22 wherein the means for collecting the condensed liquid comprises a narrow path formed by a peripheral portion of the dome cover and a peripheral portion of the tank.

FIG.1.

FIG.2.

FIG.3.

5A

6A

4

4

2A

5A

6A

3A

3A

FIG.4.

5B

6B

FIG.5.

FIG.6.

FIG.7.

FIG.8.